# EUROPÄISCHE PATENTSCHRIFT

(11) **EP 4 016 791 B1**
(45) Veröffentlichungstag und Bekanntmachung des Hinweises auf die Patenterteilung: **31.01.2024**
(21) Anmeldenummer: 21215968.5
(22) Anmeldetag: 20.12.2021
(51) Int. Cl.: H02J 7/00, H02J 50/00, H02J 50/10

(54) **LADEEINRICHTUNG**
CHARGING DEVICE
DISPOSITIF DE CHARGE

(30) Priorität: 21.12.2020 DE 102020134363
(43) Veröffentlichungstag der Anmeldung: 22.06.2022
(73) Patentinhaber: BURY Sp. z o.o., 39-300 Mielec (PL)
(72) Erfinder: Baracz, Mateusz, 36-110 Majdan Królewski (PL); Puk, Marek, 36-110 Majdan Królewski (PL)
(74) Vertreter: Günther, Constantin

(56) Entgegenhaltungen:
- DE-U1-202017 107 183
- US-A1- 2018 224 909
- US-A1- 2020 057 469

## Beschreibung

Die vorliegende Erfindung betrifft eine Ladeeinrichtung zum drahtlosen Laden von elektrischer Energie in ein tragbares Gerät, wobei die Ladeeinrichtung eine Ladeeinheit mit einer Auflagefläche und mit einer Ladeelektronik aufweist, sowie einen separaten Geräteträger mit einer Kontur zum Halten des tragbaren Gerätes aufweist, wobei die Ladeeinheit einen Lüfter hat und zur Erzeugung eines Luftstroms mittels des Lüfters eingerichtet ist.

Es sind Ladestationen bekannt, die die Energie drahtlos an das Mobiltelefon übertragen, z. B. nach dem Qi-Standard.

In US 9,673,647 B2 und CN 207910521 U sind Telefonhaltevorrichtungen beschrieben, die ein mobiles Endgerät, wie bspw. ein Smartphone auf der Ladeoberfläche der Ladestation durch magnetische Kraft in einer sicheren Position halten. Aus der US 2018/0224909 A1 ist eine Ladeeinrichtung zum drahtlosen Laden eines mobilen Geräts in einem Fahrzeug bekannt. Aus der DE 20 2017 107 183 U1 ist eine Ladevorrichtung zum drahtlosen Laden eines mobilen Endgeräts bekannt. Aus der US 2020/0057469 A1 sind ein Lüfter und ein Andockgerät mit einem solchen Lüfter bekannt.

Während des Ladevorgangs entsteht typischerweise eine nicht unerhebliche Verlustwärme. Sie lässt sich in folgende Bereiche, die auch unterschiedlichen räumlichen Bereichen entsprechen, aufteilen:
- Verlustwärme in der Ansteuerelektronik;
- Verlustwärme in den Sendespulen, insbesondere ohmsche Verluste;
- Verlustwärme in der EMV-Abschirmplatine;
- Verluste durch die magnetische Übertragung der Energie im Luftspalt zwischen Ladestation und tragbarem Gerät;
- Verlustwärme im Wireless Charging Receiver im tragbaren Gerät;
- Wärme durch den Betrieb des tragbaren Gerätes, z. B. Abwärme im hochgetakteten Prozessor.

Ein Problem ist die bei der drahtlosen Energieübertragung auftretende Wärmeentwicklung und Wärmeabfuhr.

Aufgabe der Erfindung ist es, eine verbesserte Ladeeinrichtung zu schaffen.

Die Aufgabe wird mit der Ladeeinrichtung mit den Merkmalen des Anspruchs 1 gelöst. Vorteilhafte Ausführungsformen sind in den Unteransprüchen beschrieben.

Es wird vorgeschlagen, dass die Ladeeinheit zu einer Luftführung entlang einer Außenseite der Auflagefläche eingerichtet ist, wobei der Geräteträger an seiner Unterseite ein ferromagnetisches Element aufweist, das in einem Koppelzustand des Geräteträgers mit der Ladeeinheit der Auflagefläche zugewandt ist, und/oder einer Luftführung entlang einer Innenseite der Auflagefläche und entlang von in einen Innenraum der Ladeeinheit hineinragenden Haltemagneten eingerichtet ist.

Die Ladeelektronik hat eine Ansteuerelektronik, die typischerweise unterhalb der Sendespule verbaut ist, wobei deren Abwärme sehr gut über einen Kühlkörper, dessen Kühlrippen in die dem tragbaren Gerät entgegengesetzte Richtung weisen, abgeführt werden kann. Auch ein Teil der Wärme, die in der Sendespule einer induktiven Ladeelektronik entsteht, kann über den Ferrit, der zur Sendespuleneinheit gehört, abgeführt werden, da er mechanisch und thermisch mit dem Kühlkörper verbunden werden kann. Die Wärmeenergie, die unmittelbar an der Auflagefläche durch Wirbelstromverluste und Verluste im Luftspalt entsteht, kann aber nicht mehr über den Kühlkörper abgeleitet werden, sondern muss vom tragbaren Gerät aufgenommen und von diesem abgestrahlt werden. Dies gilt ebenfalls für die Wärmeenergie im "Wireless Charging Receiver" ("drahtlos zu ladender Empfänger") und durch den Betrieb des tragbaren Gerätes selbst. Da diese Energie ein erhebliches Maß annehmen kann, insbesondere wenn auf dem tragbaren Gerät eine energieintensive Anwendung läuft, z. B. eine Navigationsanwendung, erhitzt sich das tragbare Gerät relativ schnell auf eine Temperatur, bei der die Ladung abgeschaltet werden muss, oder nur mit einer geringeren Leistung fortgeführt werden kann, um den Akku des tragbaren Gerätes zu schützen, bzw. um die Sicherheit zu gewährleisten.

Um hierbei die Temperatur zu reduzieren, besitzt die Ladeeinrichtung einen Lüfter, der dazu ausgebildet ist, Luft aus dem Innenraum des Fahrzeugs zwischen Auflagefläche und Geräteträger bzw. tragbarem Gerät zu blasen, bzw. zu saugen. Der Lüfter selbst sollte sich bevorzugt unterhalb der Auflagefläche befinden und mechanisch über eine Luftführung für die strömende Luft mit der Auflagefläche verbunden sein.

Mit der vorgeschlagenen Lösung wird bei einem kompakten Aufbau erreicht, dass ein sich an der Auflagefläche bildender Wärmestau reduziert und die Wärmeabfuhr deutlich verbessert wird. Die Ladeeinrichtung stellt hierzu eine aktive Kühlung sowohl des zu ladenden tragbaren Gerätes (auch als mobiles Endgerät bezeichnet), als auch einer Sendespule für die Energieübertragung und einer Ansteuerelektronik für diese Sendespule bereit.

Die Luftdurchlassöffnung kann eine den Luftstrom in eine parallel zur Auflagefläche der Ladeeinheit ausgerichtete Strömungsrichtung umlenkende Luftumlenkkontur haben. Damit gelingt es, einen mit dem Lüfter erzwungenen Luftstrom aus dem Innenraum des Gehäuses hinaus in einen zwischen der Auflagefläche und dem Geräteträger führenden Luftstrom umzulenken. Ebenso kann auch ein zunächst durch den Zwischenraum zwischen Auflagefläche und Geräteträger geführter Luftstrom über die Luftumlenkkontur in den Innenraum der Ladeeinheit zu dem dort angeordneten Lüfter gezogen werden. Die Luftumlenkkontur ermöglicht hierzu einen einfachen und kompakten Aufbau.

Der Geräteträger kann an der zur Auflage auf der Auflagefläche der Ladeeinheit ausgebildeten Unterseite angeordnete Rippen haben, die im Koppelzustand einen Luftkanal zwischen der Auflagefläche und der darauf aufliegenden Unterseite des Geräteträgers bereitstellen. Die Ladeeinheit hat hierbei eine von dem Lüfter in den Luftkanal gerichtete Luftdurchlassöffnung. Mit Hilfe der Rippen wird ein Luftdurchlasskanal im Zwischenraum zwischen der Auflagefläche und der Unterseite des Geräteträgers geschaffen, durch den Luft mit Hilfe des Lüfters zur Kühlung hindurchgeblasen oder zum Lüfter hin angesaugt werden kann.

Zur Gewährleistung eines Luftspaltes zwischen tragbarem Gerät und der Auflagefläche kann der Geräteträger beispielsweise an seinen Seiten (z. B. den Randabschnitten der Längsseitenkanten) zwei Stege haben, wobei der Geräteträger mit dem daran lösbar angebrachten tragbaren Gerät (z. B. Smartphone) nur auf den Stegen aufliegt und an allen anderen Stellen der Luftspalt zur Verfügung steht.

Der Geräteträger und/oder die Auflagefläche der Ladeeinheit können gekrümmt sein. Im Koppelzustand kann durch die Krümmung ein Luftkanal zwischen der Auflagefläche und der darauf aufliegenden Unterseite des Geräteträgers vorhanden sein, wobei die Ladeeinheit eine von dem Lüfter in den Luftkanal gerichtete Luftdurchlassöffnung hat.

Bei dieser anderen Möglichkeit ist die Auflagefläche mit einer bevorzugt nur leichten Rundung (konvexe oder konkave ein- oder mehrdimensionale Krümmung) versehen, wobei an verschiedenen Stellen ein unterschiedlich großer Luftspalt entsteht, durch den die Luft hindurchströmen und die Ladeeinrichtung kühlen kann.

Erfindungsgemäß wird die Kühlung des tragbaren Gerätes über in den Geräteträger eingelassene Metallelemente (z. B. ferromagnetische Bögen) und die darunterliegenden Magnete realisiert.

Die Wärme, die im tragbaren Gerät entsteht, wird dabei auf die Metallelemente im Geräteträger, die mit dem tragbaren Gerät thermisch gut kontaktiert sind, geleitet. Darunter liegen die Haltemagnete, die von den Metallelementen im Geräteträger in der Regel durch Kunststoffschichten getrennt sind. Da diese Kunststoffschichten sehr dünn gehalten werden können und nur einen kleinen thermischen Widerstand bilden, wird die Wärme gut auf die Haltemagnete der Ladeeinheit übertragen. Die Haltemagnete selbst werden im Innenraum der Ladeeinheit mit einem Luftstrom umgeben, der von einem Lüfter erzeugt wird. Die Wärme wird dadurch vom Luftstrom aus dem Innenraum der Ladeeinheit nach außen abgeführt.

Noch eine Kühlmöglichkeit ergibt sich dadurch, dass unterhalb der Auflagefläche kleine Luftkanäle angeordnet sind, durch die ein von einem Lüfter erzeugter Luftstrom geführt wird. Der Geräteträger ist an der Unterseite ganz eben ausgeführt und steht somit in großflächiger Kontaktverbindung mit der Auflagefläche, wobei die Wärme gut vom Telefon über den Geräteträger auf die Auflagefläche übertragen wird.

Die Auflagefläche der Ladeeinheit kann hierzu auf der Innenseite, die der zur Auflage des Aufnahmeteils ausgebildeten Außenseite gegenüberliegt und im Innenraum der Ladeeinheit ist, einen Luftkanal haben. Der Lüfter ist hierbei zur Erzeugung eines Luftstroms ausgebildet, der durch den Luftkanal im Innenraum der Ladeeinheit an der Innenseite der Auflagefläche entlang strömt.

Mit der Auflagefläche können wärmeleitende Elemente verbunden sein, die sich in den Innenraum der Ladeeinheit erstrecken, wobei die Ladeeinheit zum Kühlen der wärmeleitenden Elemente im Innenraum der Ladeeinheit mit einem von dem Lüfter erzeugten Luftstrom eingerichtet ist. Damit gelingt eine verbesserte Kühlung, ohne dass nach außen führende Lüftungsöffnungen erforderlich sind.

Die Haltemagnete bilden erfindungsgemäß die wärmeleitenden Elemente.

Die wärmeleitenden Elemente können Kühlrippen haben, wobei die Kühlrippen von dem Luftstrom umströmbar sind. Dies erhöht bei kompaktem Aufbau die Effizienz der Wärmeabfuhr.

Die Kombination der zuvor genannten Varianten ergibt noch eine weitere effektive Möglichkeit, das tragbare Gerät zu kühlen. Hierbei kann ebenfalls Wärme vom tragbaren Gerät über Metallelemente am Geräteträger auf Haltemagnete der Ladeeinheit geleitet werden. Gleichzeitig ist konstruktiv auch ein Luftspalt zwischen Geräteträger und Auflagefläche vorhanden. Ein Lüfter, der sich unterhalb der Auflagefläche befindet und durch einen Luftkanal mit der Oberfläche verbunden ist, saugt Luft durch den Luftspalt zwischen dem Geräteträger und der Auflagefläche, wobei die Luft bereits Wärmeenergie aufnimmt und sich dadurch leicht erwärmt. Diese Luft wird vom Lüfter angesaugt und danach um die Haltemagnete, bzw. auf mit den Haltemagneten in Verbindung stehende Kühlkörper geblasen, wobei nun noch ein weiterer Teil der Wärmeenergie aufgenommen wird. Danach strömt die nun zweifach erwärmte Luft nach außen in das Fahrzeug.

Der Lüfter kann zum Ansaugen von Luft mit einem von der Auflagefläche zum Lüfter hin gerichteten Luftstrom oder zum Ausblasen von Luft von dem Lüfter zur Auflagefläche eingerichtet und angesteuert sein.

Die Ladeeinrichtung hat Haltemagnete zur Ausübung einer Haltekraft auf den Geräteträger in dem Koppelzustand, bei dem der Geräteträger auf der Auflagefläche aufliegt. Die Ladeeinrichtung ist hierbei zur magnetischen Zusammenwirkung der Haltemagnete mit einem ferromagnetischen Element und/oder den Gegenmagneten des Geräteträgers ausgebildet.

Damit kann zum einen das tragbare Gerät (mobiles Endgerät) in einer zur Sendespule relativ genauen Position gehalten werden, damit nur eine Sendespule benötigt wird. Zum anderen wird dem Benutzer ein sehr komfortables Ablegen und Entnehmen des tragbaren Gerätes ermöglicht.

Die Auflagefläche der Ladeeinheit, auf der das tragbare Gerät aufgelegt wird, befindet sich vorzugsweise in waagerechter Position oder in einem Winkel bis maximal 90°. Ist sie nicht waagerecht ausgerichtet, dann wirkt eine Kraft senkrecht nach unten auf das tragbare Gerät, die versucht, das tragbare Gerät von der Auflagefläche herunterrutschen zu lassen. Dieser Kraft wirkt zum einen die Reibung zwischen Auflagefläche und dem Geräteträger entgegen, die sich durch entsprechende Ausgestaltung der beiden Oberflächen erhöhen lässt, und zum anderen die Magnetkraft der Haltemagnete. Dadurch ist es möglich, dass das tragbare Gerät an der Auflagefläche in Position gehalten wird, selbst wenn die Auflagefläche senkrecht steht.

Da die Ladeeinrichtung universell mit allen drahtlos ladbaren tragbaren Geräten, insbesondere Smartphones, kompatibel sein soll, und daher nicht sichergestellt sein kann, ob sich gegenüber den Haltemagneten tatsächlich magnetisch wirksame Gegenelemente, wie bspw. ferromagnetisches Metallelement oder Permanentmagnete, befinden, wird vorgeschlagen, eine gerätespezifische Schale bereitzustellen, die die Unterseite des tragbaren Gerätes überdeckt und in die das tragbare Gerät eingeclipst und durch Formschluss gehalten wird. Der Geräteträger kann als Handyschutzhülle dienen, die auch unabhängig von der Auflage auf die Ladeeinheit am tragbaren Gerät verbleibt. In einer anderen Ausführungsform kann der Geräteträger aber auch integrales Teil des tragbaren Gerätes sein und z. B. durch eine Gehäuseschale des tragbaren Gerätes gebildet werden.

Als Haltemagnete können Permanentmagnete eingesetzt werden.

Um dem tragbaren Gerät einen sicheren und genau positionierten Halt zu geben, werden vorzugsweise Permanentmagnete eingesetzt, die mit einem ferromagnetischen Gegenelement (z. B. ferromagnetische ein- oder mehrteilige Platte), Permanentmagneten im oder am Geräteträger oder tragbaren Gerät zusammenwirken.

An der Position um die Energieempfangsspule des tragbaren Gerätes herum können beispielsweise zwei halbkreisförmige ferromagnetische Metallplatten eingelassen werden. Diesen Metallplatten können jeweils vier Permanentmagnete gegenüberliegen, die unter der Auflagefläche angebracht sind, wobei diese Haltemagnete ringförmig um die Sendespule angeordnet sind. Beim Auflegen des tragbaren Gerätes, das sich in der Schale (d. h. in dem Geräteträger) befindet, wird es durch die Magnetkraft so angezogen, dass sich Haltemagnete und Metallhalbkreise direkt gegenüberstehen. Dadurch ist auch sichergestellt, dass sich Sende- und Empfangsspule in optimaler Position gegenüberstehen und der Energietransfer mit hohem Wirkungsgrad stattfindet.

Ein Vorteil dieser Lösung mit einer eindeutigen Positionierung des tragbaren Gerätes ist, dass auch nur eine Sendespule gebraucht wird, während bei einer freien Positionierung über einen Ladebereich oftmals mehrere Spulen verwendet werden, um den ganzen Bereich abzudecken.

Um dem Benutzer anzuzeigen, auf welche Position er ungefähr sein tragbares Gerät legen muss, kann sich symmetrisch um die Ladespule eine von außen sichtbare Markierung befinden, z. B. eine aufgedruckte Linie. Diese Markierung hat typischerweise die rechteckige Form eines Smartphones, um die Position noch zu verdeutlichen. Es können auch mehrere Rechtecke vorhanden sein.

Bei Anwendungen in einem Kraftfahrzeug, wo sich die Auflagefläche auf dem Dashboard z. B. in einem Winkel von 30° zur Waagerechten befindet, ist es nicht nur wichtig, dass die Haltekräfte durch Reibung und Magneten größer sind als die Schwerkraft des tragbaren Gerätes, sondern die Kräfte müssen so hoch sein, dass auch bei einem Auffahrunfall das tragbare Gerät noch sicher gehalten und nicht im Fahrzeug umhergeschleudert wird. Auch bei Fahrten über unebenen Straßen, z. B. über Kopfsteinpflaster, treten hohe Vibrationskräfte auf, die ebenfalls von den Magneten abgefangen werden müssen.

Die Herausforderung dabei ist, dass die Haltekräfte durch die Magneten zum einen stark genug sein müssen, um das tragbare Gerät in allen zuvor beschriebenen Situationen sicher zu halten, zum anderen muss es auch durch den Benutzer noch komfortabel entnehmbar sein, ohne eine allzu große Kraft aufwenden zu müssen. Daher sollten die Art, Anzahl und Anordnung der Haltemagnete geeignet ausgewählt werden.

Die Erfindung wird nachfolgend anhand eines Ausführungsbeispiels mit den beigefügten Zeichnungen beschrieben. Es zeigen:
- Figur 1 -: Explosionsansicht einer ersten Ausführungsform der Ladeeinrichtung;
- Figur 2 -: Seitenschnittansicht der Ladeeinrichtung aus Figur 1 ;
- Figur 3 -: vergrößerter Ausschnitt der Seitenschnittansicht aus Figur 2 im Bereich eines Permanentmagneten;
- Figur 4 -: Draufsicht auf die Auflagefläche A der Ladeeinrichtung;
- Figur 5 -: perspektivische Ansicht auf die Unterseite des Geräteträgers aus Figur 1;
- Figur 6 -: Seiten-Schnittansicht der oben beschriebenen Ausführungsformen der Ladeeinrichtung ohne Haltemagnete;
- Figur 7 -: perspektivische Ansicht einer weiteren Ausführungsform der Ladeeinrichtung mit gekrümmter Auflagefläche;
- Figur 8 -: Seiten-Schnittansicht der Ladeeinrichtung aus Figur 7;
- Figur 9 -: Seiten-Schnittansicht einer weiteren Ausführungsform der Ladeeinrichtung;
- Figur 10 -: perspektivische Ansicht auf die Unterseite eines Geräteträgers einer weiteren Ausführungsform der Ladeeinrichtung;
- Figur 11 -: Seiten-Schnittansicht der Ladeeinrichtung aus Figur 10;
- Figur 12 -: perspektivische Ansicht einer fünften Ausführungsform der Ladeeinrichtung;
- Figur 13 -: Seiten-Schnittansicht der Ladeeinrichtung aus Figur 12.

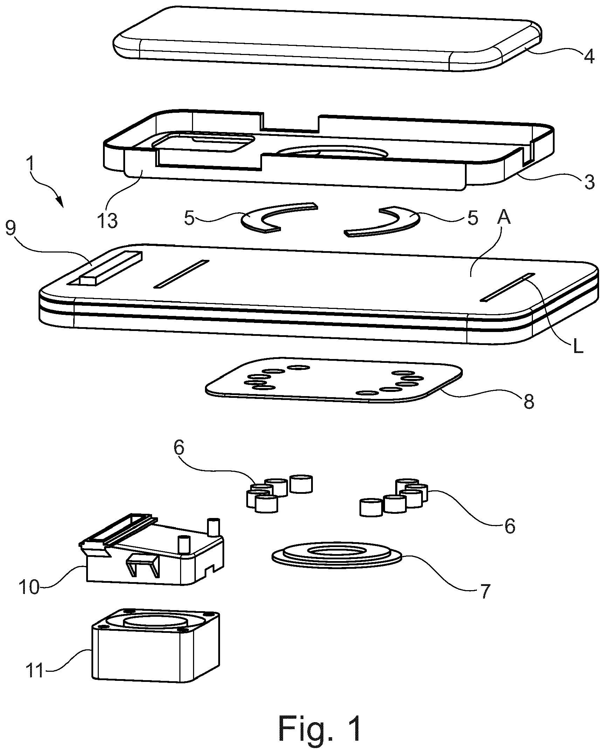

Figur 1 zeigt eine Explosionsansicht einer ersten Ausführungsform der Ladeeinrichtung. Diese hat eine Ladeeinheit 1 mit einer Oberschale 2 sowie einen Geräteträger 3. Der Geräteträger 3 ist beispielsweise in der Art einer Handyschutzhülle ausgebildet und zur Aufnahme eines spezifischen tragbaren Gerätes 4 ausgebildet.

Das tragbare Gerät 4 kann ein Smartphone sein, wobei für jeweils ein spezifisches Modell (in dargestellten Fall ein iPhone 11 Pro max) ein entsprechender gerätespezifischer Geräteträger 3 vorgesehen ist. Der Geräteträger 3 ist an die Konturen des tragbaren Gerätes 4 angepasst, um es sicher aufnehmen zu können. In den Geräteträger 3 ist ein zweiteiliges ferromagnetisches Element 5 eingearbeitet, das so platziert ist, dass es mit Permanentmagneten 6 in der Ladeeinheit 1 in magnetischer Kraftwirkung steht. Das ferromagnetische Element 5 kann in Form von einem, zwei oder mehr Metallbögen aus ferromagnetischem Material gebildet sein.

Durch diese aus den Permanentmagneten 6 gebildeten Haltemagneten in der Ladeeinheit 1 und den Gegenelementen im Geräteträger 3 in Form des ferromagnetischen Elementes 5 gelingt es, die zum drahtlosen induktiven Laden vorgesehene nicht sichtbare Empfangsspule des tragbaren Gerätes 4 in einer optimalen Position zu einer Sendespule 7 in der Ladeeinheit 1 zu halten. Die Ladeeinheit 1 hat eine Auflagefläche A an der Oberschale 2, auf die der Geräteträger 3 mit dem daran fixierten tragbaren Gerät 4 aufgelegt und durch Magnetkraft gehalten werden kann.

Die Ladeeinheit 1 hat weiterhin eine bevorzugt direkt unter der Auflagefläche A platzierte Leiterplatte 8, die zur Abschirmung des elektrischen Feldes ausgebildet ist, und auf der sich Temperatursensoren zur Erfassung der Oberflächentemperatur befinden können. Die Leiterplatte 8 besitzt Löcher für die Permanentmagneten 6, damit diese an der Innenseite der Oberschale 2 direkt unter der Oberflächenschicht der Auflagefläche A liegen, um den nichtmagnetischen Spalt zu dem ferromagnetischen Element 5 möglichst klein zu halten.

Die Permanentmagnete 6 können auf einer Kreisbahn angeordnet sein, wobei die Kontur des ferromagnetischen Elementes 5 der Kreisbahn entspricht. In dieser Kreisfläche, die von den Permanentmagneten 6 gebildet wird, befindet sich direkt unterhalb der Leiterplatte 8 die Sendespulenanordnung 7 der Ladeelektronik, die aus einer Kupferwicklung und einer darunterliegenden Ferritplatte bestehen kann.

Die Auflagefläche A besitzt an der zur Auflage des tragbaren Gerätes 4 bzw. des zugehörigen Geräteträgers 3 vorgesehenen Kopfseite eine Luftdurchlassöffnung 9 mit einer erhöht aus der Ebene der Auflagefläche A herausragenden Luftumlenckontur, aus der durch seitliche Luftdüsen Luft tangential über die Auflagefläche A strömt. Die Luft wird der als Erhöhung ausgeführten Luftumlenkkontur über einen Adapter 10, der einen Luftkanal bildet, von einem Lüfter 11 zugeführt. Der Adapter 10 ist zusammen mit dem Lüfter 11 unterhalb der Oberschale 2 im Innenraum der Ladeeinheit 1 eingebaut. Sie können mit der Oberschale 2 verbunden sein.

In die Auflagefläche A können Linien L eingefügt sein, die eine rechteckige Fläche markieren. Diese markieren die Position, auf die der Geräteträger 3 bzw. das tragbare Gerät 4 ungefähr gelegt werden muss, damit der Geräteträger 3 durch die magnetische Kraft der Haltemagnete (Permanentmagnete 6) an die optimale Ladeposition bewegt wird.

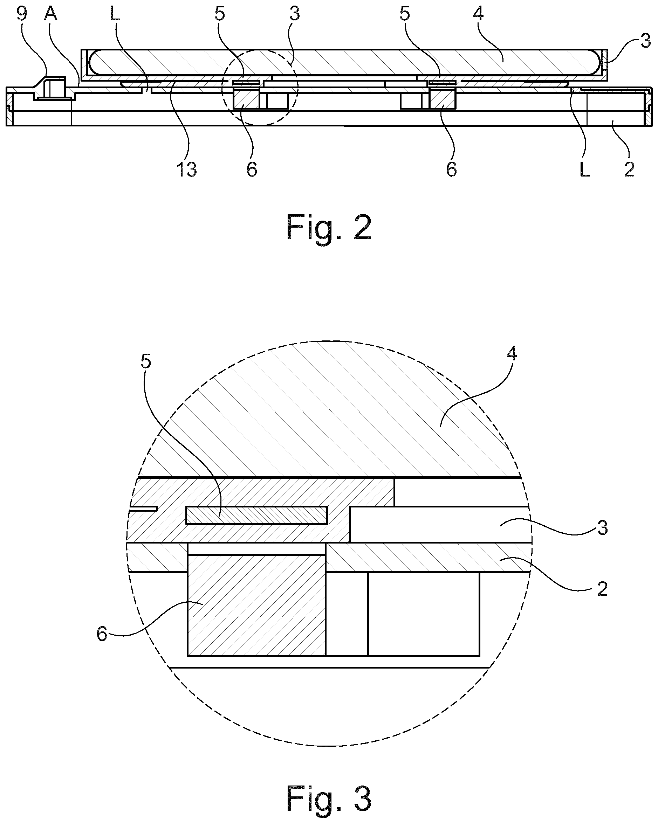

Figur 2 zeigt eine Seitenschnittansicht der Ladeeinrichtung aus Figur 1. Hierbei wird deutlich, dass der Geräteträger 3 an seiner zur Aufnahme auf der Auflagefläche A vorgesehenen Unterseite Rippen 13 an den Längsseiten, d. h. den Randkanten in der längeren Erstreckungsrichtung des Geräteträgers 3 quer zu den kürzeren Stirnkanten hat. Damit wird ein Luftkanal zwischen der Unterseite des Geräteträgers 3 und der Auflagefläche A, d. h. der Oberseite der Oberschale 2 der Ladeeinheit 1 bereitgestellt.

Erkennbar ist zudem die erhöhte, über die Ebene der Auflagefläche A herausragende Luftumlenkkontur der Luftdurchlassöffnung 9, welche sich an einer Kopfseite der Oberschale 2 befindet. Sie ist so ausgebildet, dass ein vom Lüfter 11 durch die Luftdurchlassöffnung 9 hindurch geblasener Luftstrom parallel zur Auflagefläche A zur gegenüberliegenden Kopfseite entlang des durch die Rippen 13 begrenzten Luftkanals strömt bzw. ein vom Lüfter 11 angesaugter Luftstrom in entgegengesetzter Richtung wiederum parallel zur Auflagefläche A durch den Zwischenraum zwischen Geräteträger 3 und Auflagefläche A strömt.

Figur 3 zeigt den in Figur 2 mit einem Kreis markierten Ausschnitt in vergrößerter Darstellung, aus dem die Lage der Permanentmagnete 6 zu erkennen ist.

Deutlich wird, dass die Permanentmagnete 6 mit einer Pol-Stirnfläche an der Innenwand der Oberseite der Oberschale 2 angrenzen. Durch das Kunststoffmaterial der Oberschale 2 und des Geräteträgers 3 beabstandet ist das zweiteilige ferromagnetische Element 5 angeordnet, wenn der Geräteträger 3 im Koppelzustand auf die Oberschale 2 aufgelegt ist.

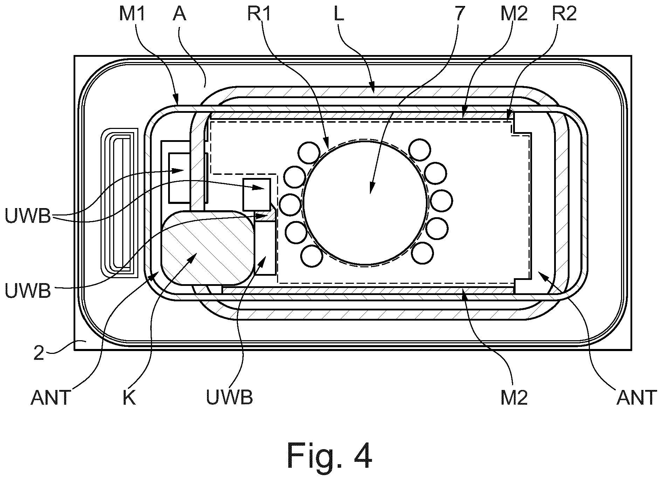

Figur 4 zeigt eine Draufsicht auf die Auflagefläche A der Ladeeinrichtung, d. h. eine Ansicht der Anordnung von oben, in der typische Antennenpositionen ANT aktueller Mobiltelefone (Smartphones) mit verschiedenen beispielhaften Konturen M1, M2 einschließlich von UWB-Antennenpositionen UWB und Kamerapositionen K eingezeichnet sind. Die Anordnung der Permanentmagnete 6 sollte so gewählt werden, dass eine Beeinflussung zum einen der Antennen des tragbaren Gerätes 4 und zum anderen der Sendespule 7 der Ladeeinheit 1 für den Energietransfer so gering wie möglich gehalten wird. Daher ergibt sich bevorzugt die dargestellte kreisförmige Anordnung der Permanentmagnete 6 um die Sendespule 7 herum. Für die Haltemagnete ist der Raumbereich außerhalb der gestrichelt dargestellten Kreiskontur R1 um die Sendespule 7 herum bis zur gestrichelt dargestellten Außenkontur R2 verfügbar.

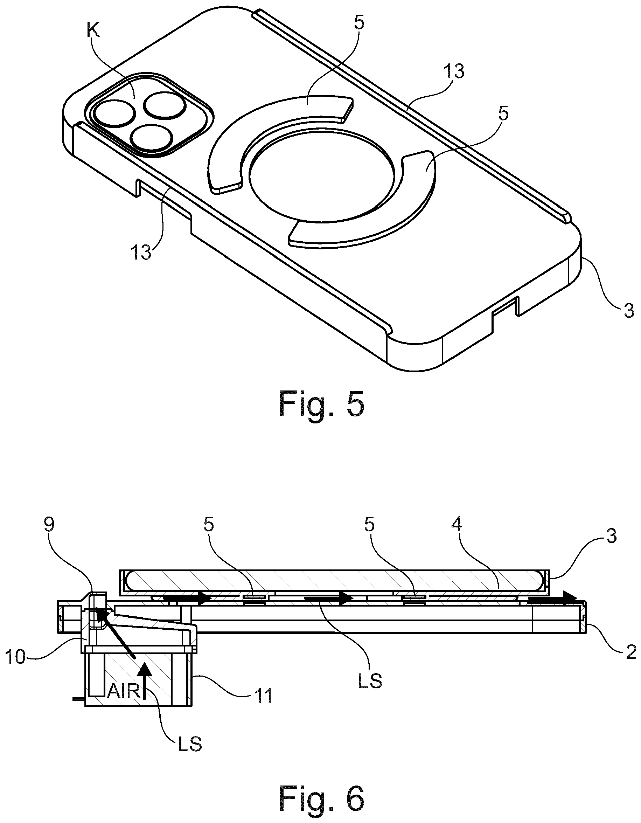

Figur 5 zeigt eine perspektivische Ansicht des Geräteträgers 3 von der zur Auflage auf die Auflagefläche A vorgesehenen Unterseite. Diese Unterseite ist nicht plan, sondern besitzt Erhöhungen an den Stellen, wo die Metallplatten des ferromagnetischen Elementes 5 angebracht sind. Ebenfalls sind die Seitenwände des Geräteträgers 3 etwas herausgezogen, wodurch ebenfalls eine Erhöhung in Form von Rippen 13 entsteht, welche sich an den Randkanten entlang der Längsseite des Geräteträgers 3 erstrecken.

Diese Erhöhungen bilden einen Luftspalt für die übrigen Flächen, wenn der Geräteträger 3 mit dem daran angeordneten tragbaren Gerät 4 auf der Auflagefläche A aufliegt.

Im Folgenden sind verschiedene Kühlkonzepte aufgezeigt.

Figur 6 zeigt eine Seiten-Schnittansicht der oben beschriebenen Ausführungsformen der Ladeeinrichtung ohne Darstellung der Haltemagnete. Dabei ist ein Luftstrom L zur Kühlung des tragbaren Gerätes 4 erkennbar. Die Luft wird vom Lüfter 11 über den Adapter 10 durch die Luftdurchlassöffnungen 9 in den Luftkanal zwischen dem tragbaren Gerät 4 bzw. dessen Geräteträger 3 und der Auflagefläche A geblasen.

Am anderen Ende des tragbaren Gerätes 4, gegenüberliegend zur Luftdurchlassöffnung 9, tritt die nun erwärmte Luft wieder aus und strömt in den Innenraum des Fahrzeugs, in das die Ladeeinrichtung eingebaut ist.

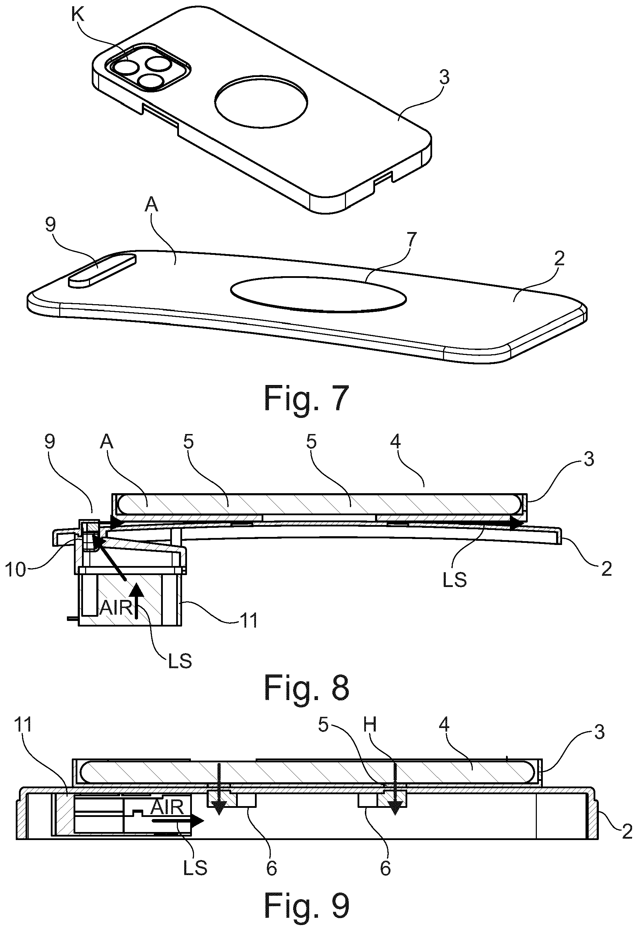

Figur 7 lässt eine andere Ausführungsform erkennen. Dabei hat der Geräteträger 3 keine erhöhten Seitenwände bzw. Rippen 13, so dass die Unterseite des Geräteträgers 3 im Wesentlichen plan ist. Die Auflagefläche A der Ladeeinheit 1 ist hingegen gekrümmt. Sie kann beispielsweise entlang der längeren Erstreckungsrichtung leicht gebogen sein.

Dies ist in der Schnittzeichnung in Figur 8 zu erkennen. Dadurch entsteht im Koppelzustand an einigen Bereichen des aufgelegten Geräteträgers 3 ein Luftspalt zwischen der Unterseite des Geräteträgers 3 und der Auflagefläche A der Ladeeinheit 1, durch den Luft zur Kühlung hindurchgeblasen bzw. angesaugt werden kann. In der Figur 8 ist ein vom Lüfter 11 zur gegenüberliegenden Seite geblasener Luftstrom LS skizziert.

Figur 9 zeigt eine Seiten-Schnittansicht einer weiteren Ausführungsform der Ladeeinrichtung. Bei diesem modifizierten Kühlkonzept wird die im tragbaren Gerät 4 entstehende Wärme H über die Metallplatten des ferromagnetischen Elementes 5 auf die Permanentmagnete 6 der Ladeeinheit 1 übertragen. Die Ladeeinrichtung ist so ausgelegt, dass der thermische Widerstand zwischen der Rückseite des tragbaren Gerätes 4 und der Metallplatten des ferromagnetischen Elementes 5 und zwischen diesen Metallplatten und den Permanentmagneten 6 durch Verwendung dünner (Kunststoff-)-Materialien sehr gering gehalten wird. Der Lüfter 11 transportiert die Luft durch einen Kanal unterhalb der Auflagefläche A an den Permanentmagneten 6 vorbei. Am Ende des Gehäuses strömt die erwärmte Luft aus dem geschlossenen oder nach unten offenen Gehäuse der Ladeeinheit 1 in den Innenraum des Fahrzeugs. Zur besseren Abgabe der Wärme H an die Luft können an den Haltemagneten, hier den Permanentmagneten 6, Kühlkörper angebracht sein. Diese Ausführungsform hat den Vorteil, dass der Geräteträger 3 ohne einen Luftspalt auf der Auflagefläche A direkt aufliegt und somit ein kleinerer Abstand zwischen der Sendespule 7 und der Empfangsspule im tragbaren Gerät 4 erreicht wird, was zu einer höheren Effizienz der Energieübertragung führt.

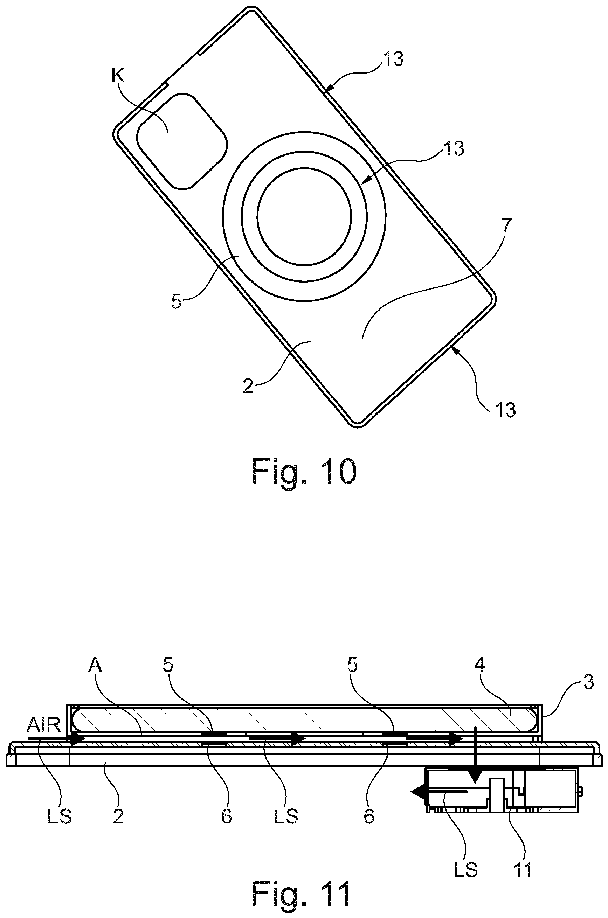

Figur 10 zeigt eine perspektivische Ansicht auf die Unterseite eines Geräteträgers 3 einer weiteren Ausführungsform der in Figur 11 in Seiten-Schnittansicht im Koppelzustand skizzierten Ladeeinrichtung. Im Gegensatz zu den oben beschriebenen ersten beiden Ausführungsformen besitzt die Auflagefläche A als Luftdurchlassöffnung 9 keine erhöhte Luftaustrittsöffnung, sondern eine Lufteintrittsöffnung. Der Geräteträger 3 ist mit den erhöhten Seitenwänden, d. h. mit Rippen 13 ausgeführt, so dass sich auch hier ein Luftspalt zwischen dem Geräteträger 3 und der Auflagefläche A befindet. Der Lüfter 11 befindet sich unterhalb der als Lufteintrittsöffnung dienenden Luftdurchlassöffnung 9 und saugt die Luft aus dem Fahrzeuginnenraum durch den Luftspalt zwischen Geräteträger 9 und Auflagefläche A und die Lufteintrittsöffnung 9 in das Gehäuse hinein. Danach wird die bereits etwas erwärmte Luft durch einen Kanal im Innern des Gehäuses der Ladeeinheit 1 an den Permanentmagneten 6 vorbei geblasen, und sie verlässt das Gehäuse wieder an der Stirnseite.

Diese Kühlmethode ist eine Kombination aus der ersten Ausführungsform in Figur 6 und der dritten Ausführungsform in Figur 9. Vorteil ist, dass die Luftströmung LS mit nur einem Lüfter 11 zur Kühlung doppelt genutzt wird, was zu einer höheren Kühleffektivität führt.

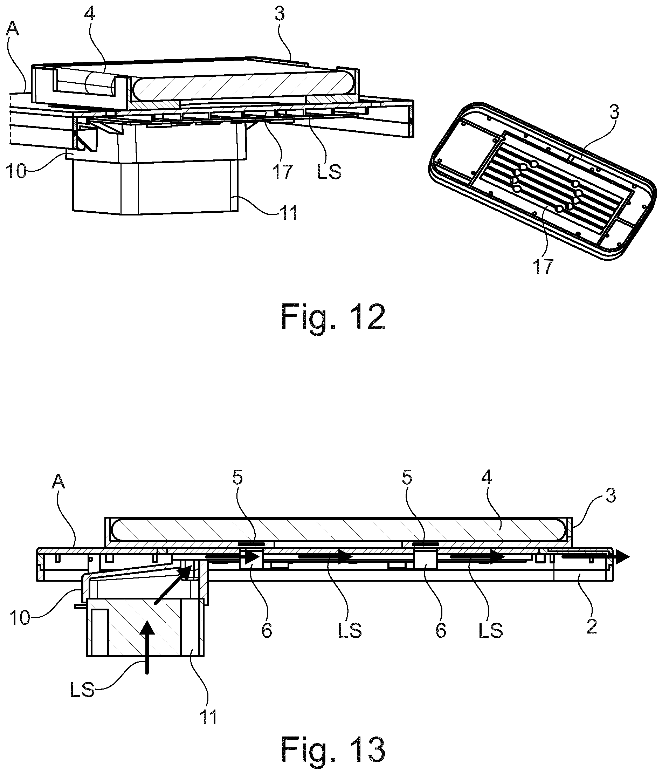

Figur 12 zeigt eine perspektivische Ansicht einer fünften Ausführungsform der Ladeeinrichtung, bei der im Innenraum des Gehäuses der Ladeeinheit 1 unter der Auflagefläche A an der Innenfläche der Oberschale 2 Längsrippen 17 vorhanden sind, die sich in der längeren Längserstreckungsrichtung der Ladeeinheit 1 parallel im Abstand zueinander erstrecken und zusammen mit der darunter liegenden Leiterplatte 8 mehrere längliche Luftkanäle bilden.

Figur 13 zeigt die dazu gehörende Seiten-Schnittansicht, auf der zu erkennen ist, dass der Luftstrom LS vom Lüfter 11 über den Adapter 10 in die Luftkanäle unterhalb der Auflagefläche A geblasen wird. Am anderen Ende des Gehäuses der Ladeeinheit 1 tritt die erwärmte Luft wieder aus und strömt in den Fahrzeuginnenraum. Hier ist der Vorteil, dass es keine Öffnungen in der Auflagefläche A gibt, und dass der Geräteträger 3 plan aufliegt, was wiederum eine höhere Ladeeffizienz zur Folge hat. Dabei kann insbesondere eine integral mit dem tragbaren Endgerät 4 ausgebildete Gehäuseschale des tragbaren Endgerätes 4 als Geräteträger 3 genutzt werden.

## Patentansprüche

1. Ladeeinrichtung zum drahtlosen Laden von elektrischer Energie in ein tragbares Gerät (4), wobei die Ladeeinrichtung eine Ladeeinheit (1) mit einer Auflagefläche (A) und mit einer Ladeelektronik aufweist, sowie einen separaten Geräteträger (4) mit einer Kontur zum Halten des tragbaren Gerätes (4) aufweist, wobei die Ladeeinheit (1) einen Lüfter (11) hat und zur Erzeugung eines Luftstroms (LS) mittels des Lüfters (11) eingerichtet ist, **dadurch gekennzeichnet, dass** die Ladeeinheit (1) zu einer Luftführung entlang einer Außenseite der Auflagefläche (A) eingerichtet ist, wobei der Geräteträger (3) an seiner Unterseite ein ferromagnetisches Element (5) aufweist, das in einem magnetischen Koppelzustand des Geräteträgers (3) mit Haltemagneten der Ladeeinheit (1) der Auflagefläche (A) zugewandt ist, sodass der Luftstrom das ferromagnetische Element umströmt, und/oder zu einer Luftführung entlang einer Innenseite der Auflagenfläche (A) und entlang der Haltemagnete, die in einen Innenraum der Ladeeinheit (1) hineinragen, eingerichtet ist, sodass der Luftstrom die Haltemagnete umströmt.

2. Ladeeinrichtung nach Anspruch 1, **dadurch gekennzeichnet, dass** die Ladeeinheit (1) eine von dem Lüfter (11) in den Luftkanal gerichtete Luftdurchlassöffnung (9) hat und die Luftdurchlassöffnung (9) eine den Luftstrom (LS) in eine parallel zur Auflagefläche (A) der Ladeeinheit (1) ausgerichtete Strömungsrichtung umlenkende Luftumlenkkontur hat.

3. Ladeeinrichtung nach Anspruch 1 oder 2, **dadurch gekennzeichnet, dass** der Geräteträger (3) an der zur Auflage auf der Auflagefläche (A) der Ladeeinheit (1) ausgebildeten Unterseite angeordnete Rippen (13) hat, die im Koppelzustand einen Luftkanal zwischen der Auflagefläche (A) und der darauf aufliegenden Unterseite des Geräteträgers (3) bereitstellen, wobei die Ladeeinheit (1) eine von dem Lüfter (11) in den Luftkanal gerichtete Luftdurchlassöffnung (9) hat.

4. Ladeeinrichtung nach einem der vorhergehenden Ansprüche, **dadurch gekennzeichnet, dass** der Geräteträger (3) und/oder die Auflagefläche (A) der Ladeeinheit (1) gekrümmt sind, wobei im Koppelzustand durch die Krümmung ein Luftkanal zwischen der Auflagefläche (A) und der darauf aufliegenden Unterseite des Geräteträgers (3) vorhanden ist und die Ladeeinheit (1) eine von dem Lüfter (11) in den Luftkanal gerichtete Luftdurchlassöffnung (9) hat.

5. Ladeeinrichtung nach einem der vorhergehenden Ansprüche, **dadurch gekennzeichnet, dass** die Auflagefläche (A) der Ladeeinheit (1) auf der Innenseite, die der zur Auflage des Geräteträgers (3) ausgebildeten Außenseite gegenüberliegt und im Innenraum der Ladeeinheit (1) ist, einen Luftkanal hat, wobei der Lüfter (11) zur Erzeugung eines durch den Luftkanal im Innenraum der Ladeeinheit (1) an der Innenseite der Auflagefläche (A) entlang strömenden Luftstroms (LS) ausgebildet ist.

6. Ladeeinrichtung nach einem der vorhergehenden Ansprüche, **dadurch gekennzeichnet, dass** der Lüfter (11) zum Ansaugen von Luft mit einem von der Auflagefläche (A) zum Lüfter (11) hin gerichteten Luftstrom (LS) oder zum Ausblasen von Luft von dem Lüfter (11) zur Auflagefläche (A) eingerichtet und angesteuert ist.

7. Ladeeinrichtung nach einem der vorhergehenden Ansprüche, **dadurch gekennzeichnet, dass** mit der Auflagefläche (A) wärmeleitende Elemente verbunden sind, die sich in den Innenraum der Ladeeinheit (1) erstrecken, wobei die Ladeeinheit (1) zum Kühlen der wärmeleitenden Elemente im Innenraum der Ladeeinheit (1) mit einem von dem Lüfter (11) erzeugten Luftstrom (LS) eingerichtet ist.

8. Ladeeinrichtung nach Anspruch 7, **dadurch gekennzeichnet, dass** die wärmeleitenden Elemente Kühlrippen haben, wobei die Kühlrippen von dem Luftstrom (LS) umströmbar sind.

## Claims

1. Charging device for the wireless charging of electrical energy into a portable device (4), wherein the charging device comprises a charging unit (1) with a support surface (A) and with charging electronics, and a separate device carrier (4) with a contour for holding the portable device (4), wherein the charging unit (1) has a fan (11) and is arranged for generating an air flow (LS) by means of the fan (11), **characterised in that** the loading unit (1) is set up to guide air along an outer side of the support surface (A), the device carrier (3) having a ferromagnetic element (5) on its underside, which in a magnetic coupling state of the equipment carrier (3) with holding magnets of the loading unit (1) faces towards the support surface (A), so that the air flow flows around the ferromagnetic element, and/or is set up to guide air along an inner side of the support surface (A) and along the holding magnets, which project into an interior space of the loading unit (1), so that the air flow flows around the holding magnets.

2. Charging device according to claim 1, **characterised in that** the loading unit (1) has an air passage opening (9) directed from the fan (11) into the air duct (9) and the air passage opening (9) has an air deflection contour deflecting the air flow (LS) in a flow direction directed parallel to the support surface (A) of the loading unit (1).

3. Charging device according to claim 1 or 2, **characterised in that** the device carrier (3) has ribs (13) arranged on the underside designed to be bear on the support surface (A) of the loading unit (1), which ribs (13), in the coupled state, provide an air channel between the support surface (A) and the underside of the device carrier (3) resting thereon, wherein the loading unit (1) has an air passage opening (9) directed from the fan (11) into the air duct.

4. Charging device according to one of the preceding claims, **characterised in that** the device carrier (3) and/or the support surface (A) of the loading unit (1) are curved, wherein in the coupled state the curvature creates an air duct between the support surface (A) and the underside of the device carrier (3) resting thereon, and the loading unit (1) has an air passage opening (9) directed from the fan (11) into the air duct.

5. Charging device according to one of the preceding claims, **characterised in that** the support surface (A) of the loading unit (1) on the inner side which is opposite the outer side designed to support the device carrier (3) and is in the interior of the loading unit (1), has an air duct, wherein the fan (11) being designed to generate an air flow (LS) through the air duct in the interior of the loading unit (1) along the inside of the support surface (A).

6. Charging device according to one of the preceding claims, **characterised in that** the fan (11) is designed for sucking in air with an air flow (LS) directed from the support surface (A) towards the fan (11) or for blowing out air from the fan (11) to the support surface (A) and is controlled.

7. Charging device according to one of the preceding claims, **characterised in that** heat-conducting elements are connected to the support surface (A) which extend into the interior of the loading unit (1), the loading unit (1) being set up for cooling the heat-conducting elements in the interior of the loading unit (1) with an air flow (LS) generated by the fan (11).

8. Charging device according to claim 7, **characterised in that** the heat-conducting elements have cooling fins, wherein the air flow (LS) can flow around the cooling fins.

## Revendications

1. Dispositif de charge destiné à une charge sans fil d'énergie électrique dans un appareil portable (4), dans lequel le dispositif de charge présente une unité de charge (1) comprenant une surface de contact (A) et une électronique de charge, et présente un support d'appareil séparé (4) avec un contour destiné à maintenir l'appareil portable (4), dans lequel l'unité de charge (1) a un ventilateur (11) et est configurée pour générer un courant d'air (LS) au moyen du ventilateur (11), **caractérisé en ce que** l'unité de charge (1) est configurée pour guider l'air le long d'un côté extérieur de la surface de contact (A), dans lequel le support d'appareil (3) présente au niveau de sa face inférieure un élément ferromagnétique (5) qui, dans un état de couplage magnétique du support d'appareil (3) avec des aimants de maintien de l'unité de charge (1), est tourné vers la surface de contact (A), de telle sorte que le courant d'air circule autour de l'élément ferromagnétique, et/ou est configurée pour guider de l'air le long d'un côté intérieur de la surface de contact (A) et le long des aimants de maintien, qui se projettent jusque dans un espace intérieur de l'unité de charge (1), de telle sorte que le courant d'air circule autour des aimants de maintien.

2. Dispositif de charge selon la revendication 1, **caractérisé en ce que** l'unité de charge (1) a une ouverture de passage d'air (9) dirigée depuis le ventilateur (11) jusque dans le canal à air et l'ouverture de passage d'air (9) a un contour de recirculation d'air faisant recirculer le courant d'air (LS) dans une direction de circulation parallèle à la surface de contact (A) de l'unité de charge (1).

3. Dispositif de charge selon la revendication 1 ou 2, **caractérisé en ce que** le support d'appareil (3) a des nervures (13), agencées au niveau de la face inférieure réalisée à des fins de contact sur la surface de contact (A) de l'unité de charge (1), qui, à l'état couplé, fournissent un canal à air entre la surface de contact (A) et la face inférieure, reposant sur celle-ci, du support d'appareil (3), dans lequel l'unité de charge (1) a une ouverture de passage d'air (9) dirigée depuis le ventilateur (11) jusque dans le canal à air.

4. Dispositif de charge selon l'une quelconque des revendications précédentes, **caractérisé en ce que** le support d'appareil (3) et/ou la surface de contact (A) de l'unité de charge (1) sont courbes, dans lequel, à l'état de couplage, la courbure produit un canal à air entre la surface de contact (A) et la face inférieure, reposant sur celle-ci, du support d'appareil (3) et l'unité de charge (1) a une ouverture de passage d'air (9) dirigée depuis le ventilateur (11) jusque dans le canal à air (9).

5. Dispositif de charge selon l'une quelconque des revendications précédentes, **caractérisé en ce que** la surface de contact (A) de l'unité de charge (1) a un canal à air sur le côté intérieur, qui se trouve à l'opposé du côté extérieur réalisé pour le contact du support d'appareil (3) et qui est dans l'espace intérieur de l'unité de charge (1), dans lequel le ventilateur (11) est réalisé pour générer un courant d'air (LS) circulant à travers le canal à air dans l'espace intérieur de l'unité de charge (1) le long du côté intérieur de la surface de contact (A).

6. Dispositif de charge selon l'une quelconque des revendications précédentes, **caractérisé en ce que** le ventilateur (11) est configuré et commandé pour aspirer de l'air avec un courant d'air (LS) dirigé depuis la surface de contact (A) jusqu'au ventilateur (11) ou pour souffler de l'air depuis le ventilateur (11) jusqu'à la surface de contact (A).

7. Dispositif de charge selon l'une quelconque des revendications précédentes, **caractérisé en ce que** des éléments thermoconducteurs, qui s'étendent jusque dans l'espace intérieur de l'unité de charge (1), sont liés à la surface de contact (A), dans lequel l'unité de charge (1) est configurée pour refroidir les éléments thermoconducteurs dans l'espace intérieur de l'unité de charge (1) avec un courant d'air (LS) généré par le ventilateur (11).

8. Dispositif de charge selon la revendication 7, **caractérisé en ce que** les éléments thermoconducteurs ont des ailettes de refroidissement, dans lequel le courant d'air (LS) peut circuler autour des ailettes de refroidissement.
